# EUROPEAN PATENT SPECIFICATION

(11) **EP 4 555 298 B1**
(45) Date of publication and mention of the grant of the patent: **07.10.2026**
(21) Application number: 23745262.8
(22) Date of filing: 30.06.2023
(51) Int. Cl.: G01N 1/30

(54) **IMPROVED COMPOSITION FOR THE TREATMENT OF BIOLOGICAL, CYTOLOGICAL, HISTOLOGICAL AND AUTOPSICAL SAMPLES**
VERBESSERTE ZUSAMMENSETZUNG ZUR BEHANDLUNG VON BIOLOGISCHEN, ZYTOLOGISCHEN, HISTOLOGISCHEN UND AUTOPSISCHEN PROBEN
COMPOSITION AMÉLIORÉE POUR LE TRAITEMENT D'ÉCHANTILLONS BIOLOGIQUES, CYTOLOGIQUES, HISTOLOGIQUES ET AUTOPSIQUES

(30) Priority: 12.07.2022 IT 202200014608
(43) Date of publication of application: 21.05.2025
(73) Proprietor: Diapath S.p.A., 24057 Martinengo (BG) (IT)
(72) Inventor: LUPO, Carmelo, 24057 Martinengo (BG) (IT); CASATTA, Nadia, 24057 Martinengo (BG) (IT); GAFFORELLI, Daria, 24057 Martinengo (BG) (IT); BATTISTEL, Alberto, 24057 Martinengo (BG) (IT); BERGAMINI, Vladimiro, 24057 Martinengo (BG) (IT)
(74) Representative: Trupiano, Federica
(86) International application number: PCT/IB2023/056835
(87) International publication number: WO 2024/013605

(56) References cited:
- CN-A- 108 344 608
- CN-A- 108 387 421
- CN-A- 109 738 249

## Description

### Summary of the Invention

The present invention relates to a novel composition for treating biological, cytological, histological and autopsical samples, in particular to a composition capable of merging reagents for the dehydration, clarification and paraffin infiltration treatments of the sample, and to its use in the preparation of samples for analysis.

### Technical background

The anatomo-pathological diagnosis is the result of the interpretation by the anatomo-pathologist of the morphological, macroscopical and microscopical characteristics of the biological sample under examination.

To provide an accurate and complete diagnosis, the sample excised from the patient must undergo a series of treatments with the purpose of ensuring its preservation over time. Such treatments essentially provide for:
i. fixation;
ii. dehydration;
iii. clarification; and
iv. paraffin infiltration.

The first stage of such processes consists in the fixation of the sample in a 10% buffered neutral formalin solution, which is able to minimize the degradation phenomena caused by the removal of the tissue from its vital environment and by the possible presence of microorganisms.

After the fixation, the sample is usually dehydrated by several subsequent steps with ethanol solutions of increasing concentration, up to 99% ethanol and subsequently clarified with xylene. The purpose of these steps is to remove water from the sample to allow its subsequent infiltration in paraffin, which is a hydrophobic substance.

The final paraffin infiltration is necessary to make the sample solid enough to be cut into micrometer sections, to be subsequently stained and analyzed.

The purpose of the various steps of the dehydration treatment (with ethanol solutions) is to replace the water inside the tissue with solutions of increasing hydrophobicity to make possible the penetration of paraffin, which is a completely hydrophobic substance. Generally, after the formalin fixation, a dehydration and clarification treatment protocol provides for subjecting the sample to the following steps:
- treatment with 70% alcohol;
- treatment with 90% alcohol;
- treatment with 99% alcohol (three times); and
- clarifying treatment with xylene (three times).

After the clarification step with xylene, which is able to remove the alcohol and to clearly increase the compatibility with paraffin, in terms of hydrophobicity, the tissue is infiltrated, usually by three consecutive baths of melted paraffin at a temperature of about 60°C. The triple step allows to obtain an infiltrated tissue free of xylene, which is released from the sample especially in the first paraffin bath.

After the paraffin infiltration, the sample can be included in a paraffin block and cut in a microtome.

The treatments (ii), (iii) and (iv) above require considerable time and energy, as well as the use of large quantities of solvents.

In fact, a common protocol provides for the use of 4-5 liters of solvent for each single step. Note that for the following processing:
- treatment with 70% alcohol (dehydration);
- treatment with 90% alcohol (dehydration);
- treatment with 99% alcohol (three times) (dehydration);
- clarifying treatment with xylene (three times); and
- paraffin infiltration treatment (three times)
a total of about 40-45 liters of solvents (alcohol and xylene) are used about every 1000 samples, in addition to the paraffin used for the infiltration, in a process that takes about 14 hours.

WO03/100384, EP822403 and WO2013/144986 describe compositions that allow the dehydration and clarification steps to be carried out simultaneously. However, the processing of the samples with said compositions is time-consuming and subsequently the sample must undergo a paraffin infiltration step. In addition, EP822403 requires the use of microwaves to carry out the treatment, as well as high temperatures and pressures. Such conditions require more complex technologies. This, in conjunction with a high number of subsequent steps to complete the processing, exposes the sample to a higher risk of failure and, consequently, a higher risk of not properly maintaining the morphological and molecular characteristics of the sample itself.

Italian Patent Applications No. 102020000025159 and No. 102020000031031, in the name of the Applicant, describe compositions for the preparation of biological, cytological, histological and autopsical samples based on paraffin, an alcohol selected from ethanol and isopropanol, and at least one hydrocarbon selected from naphtha, octane, isoparaffin and limonene.

Tissues with an adipose component, for example but not only, breast tissue, are tissues that are known to be more difficult to process than other tissues, require longer processing times and are less responsive to dehydration, clarification and infiltration treatments.

For completeness, the following table shows the comparison between a standard processing protocol and that of fat tissue processing by an automatic processor with alcohols and xylene. Both protocols exemplify procedures used routinely in anatomic pathology laboratories.

| **REAGENT** | **TEMPERATURE** | **STANDARD SAMPLE TIME (hours)** | **FAT SAMPLE TIME (hours)** |
|---|---|---|---|
| Formalin | ambient | 1:30 | 1:30 |
| Alcohol | ambient | 0:15 | 0:15 |
| Alcohol | ambient | 1:00 | 1:00 |
| Alcohol | ambient | 1:00 | 1:00 |
| Alcohol | ambient | 1:00 | 1:00 |
| Alcohol | ambient | 1:00 | 1:00 |
| Alcohol | ambient | 1:45 | 1:45 |
| Alcohol | ambient | 2:00 | 2:45 |
| Xylene | 35°C | 1:00 | 1:00 |
| Xylene | 35°C | 1:30 | 2:00 |
| Xylene | 35°C | 2:00 | 3:30 |
| Paraffin | 60°C | 1:00 | 1:00 |
| Paraffin | 60°C | 1:30 | 1:30 |
| Paraffin | 60°C | 2:00 | 2:30 |
| **Total time** | | **18:44** | **21:59** |

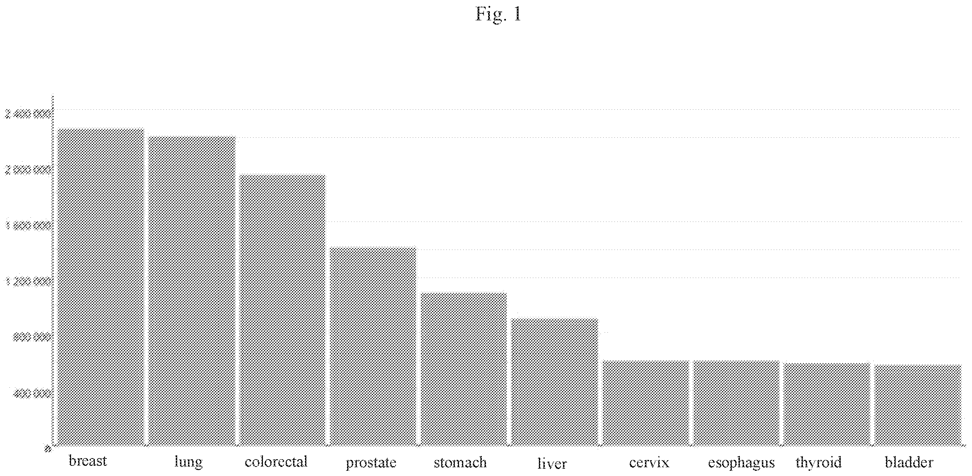

The above processing is frequently used for treating samples with suspected oncological nature. In such area, it is known that a high percentage of samples have a significant adipose component, which by its inherent nature, requires prolonged treatments to achieve optimal processing. To give an idea of the extent of the spread of what is described, Figure 1, taken from the site https://gco.iarc.fr/today/home, which collects official WHO data, is depicted. It is evident that breast cancer clearly shows with higher incidence but the incidence of, for example, colorectal cancer, another tissue with an important adipose component, is also relevant. The Applicant noted that most of the known compositions are not suitable for processing tissue samples with adipose component, and that even the compositions in the Italian Patent Applications mentioned above, although very effective in processing most tissues, do not provide optimal results on tissues with a predominance of adipose component.

In light of the above data, it seems evident that there is a need to provide novel innovative reagents that can better process even tissues with adipose component, while still saving time and solvents, thus making faster, cheaper and more environmentally friendly the treatment of tissue samples for analysis.

CN108344608 D1 describes the microwave processing of biological samples by three sequential treatments with three different reagent mixtures A, B, and C. In particular, the C mixture comprises an isoparaffin that consist in isododecane, a long-chain hydrocarbon that is constituted by n-heptane, and further comprises n-hexanol and methylsalicylate.

CN108387421 describes the microwave processing of biological samples by two sequential treatments with two reagent mixtures A and B. In particular, the B mixture comprises an isoparaffin that is constituted by isododecane, a long-chain hydrocarbon that is constituted by n-heptane, and further comprises n-hexanol.

In both of the above documents, no single composition is described for processing biological samples but three mixtures (A, B and C) or two mixtures (A and B) are used sequentially.

### Objects of the invention

An object of the of the invention is to provide a composition for preparing biological, cytological, histological and autopsical samples, preferably, but not only, tissue samples with an adipose component for their analysis, which reduces the time and cost of the treatments of said samples and requires the use of few steps and reagents.

Another object of the invention is to provide the use of a composition for preparing biological, cytological, histological and autopsical samples for the analysis thereof, and a method for preparing said samples.

A further object is to provide a composition as a single reagent for performing the simultaneous dehydration, clarification and infiltration of biological, cytological, histological and autopsical samples, which is particularly suitable for tissues with an adipose component.

Finally, a further object of the invention is to provide methods and processes which use said composition.

The present invention is defined in the appended claims.

### Brief description of the figures

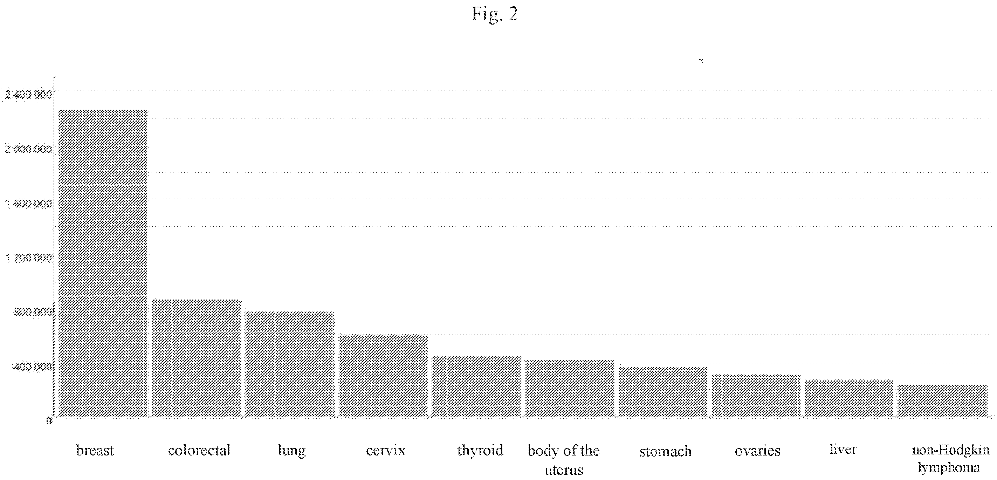

Figures 1 and 2 show the worldwide incidence of different cancer diseases classified by originating tissue; in Figure 1 the data include both sexes and all age groups, in Figure 2 the data include only female sex and all age groups.
Figures 3 to 7 show tissue samples processed according to Example 5 (Figure 3 using n-pentanol; Figure 4 using 2-methyl-1-butanol; Figure 5 using iso-pentanol; Figures 6 and 7 using n-hexanol).
Figures 8 and 9 show tissue samples processed according to Example 6 (Figure 8 using n-pentanol; Figure 9 using n-hexanol).
Figures 10 and 11 show tissue samples processed according to Example 7 (Figure 10 using comparative composition C4; Figure 11 using comparative composition C7).
Figure 12 shows tissue samples processed according to Example 8, using a representative composition of the Italian Patent Applications No. 102020000025159 and No. 102020000031031.

### Description of the invention

Subject-matter of the invention, according to an aspect thereof, is the use of a composition comprising paraffin, isoparaffin, ethanol and at least one alcohol having 5 or 6 carbon atoms, for the preparation of biological, cytological, histological and autopsical samples for the analysis thereof.

More particularly, subject-matter of the invention is the use of said composition as a reagent for performing simultaneously the treatments of dehydration, clarification and infiltration in paraffin, in a single step.

According to a preferred embodiment, said samples are tissue samples with an adipose component.

By "tissue with an adipose component" is meant herein to denote any tissue rich in fat matter, such as adipocytes, lipomas, parenchymal tissue, breast tissue, omentum, skin and the like.

By "paraffin" herein is meant paraffin for analysis, preferably for histological analysis, preferably having a melting point of 56-58°C.

According to the invention, the at least one alcohol having 5 or 6 carbon atoms can be linear or branched such as n-pentanol, iso-pentanol, 2-methylbutanol, n-hexanol, neo-hexanol, iso-hexanol, 3-methylpentanol, 2,3-dimethylbutanol. Mixtures of alcohols having 5 or 6 carbon atoms can also be used. According to a preferred embodiment, said alcohol is selected from 2-methylbutanol, n-hexanol and mixtures thereof. Iso-pentanol also provided optimal results but unfortunately has a very unpleasant odor, so it is preferable to use other alcohols.

By "isoparaffin" is meant herein to denote a mixture of aliphatic hydrocarbons, preferably a mixture of aliphatic hydrocarbons predominantly composed of molecules having 9 to 28 carbon atoms, predominantly 11 to 15 carbon atoms.

Preferably, by "isoparaffin" is meant herein to denote a mixture of aliphatic hydrocarbons, substantially free of aromatic hydrocarbons (usually less than 2%) with a melting point below 60°C and predominantly composed of molecules having 9 to 28 carbon atoms, predominantly 11 to 15 carbon atoms. According to a preferred embodiment, the isoparaffin of the composition of the invention has Chemical Abstracts number 90622-58-5 (defined as "Alkanes, C11-15-iso-" according to ECHA (European Chemicals Agency).

According to the present invention, isoparaffin is a mixture of aliphatic hydrocarbons, as defined above, and does not consist in isododecane alone.

Compared with the clarifiers commonly used in anatomic pathology, isoparaffin is a particularly advantageous hydrocarbon because, in addition to providing optimal results in the composition of the invention, it is not categorized as either GHS02 or GHS09 under the Globally Harmonized System (GHS) labeling.

Unless otherwise specified, all percentages and ratios described herein are expressed by volume.

According to an embodiment, the composition may also comprise 2,2-dimethoxypropane.

Subject-matter of the present invention, according to another aspect thereof, is a composition comprising, or alternatively consisting of, paraffin, isoparaffin, ethanol and at least one alcohol having 5 or 6 carbon atoms, and possibly 2,2-dimethoxypropane.

According to a preferred embodiment, the composition of the invention comprises, or alternatively consists of:
- paraffin: 20-50%, preferably about 30%;
- isoparaffin: 20-40%, preferably about 30%;
- ethanol: 15-25%, preferably about 20%; and
- at least one alcohol having 5 or 6 carbon atoms: 5-25%, preferably about 20%, preferably selected from 2-methyl-butanol, n-hexanol or the mixtures thereof; and
- possibly one or more further components, at the rate of 0-15%, preferably 0-5%;
said % being expressed by volume to the total volume of the composition.

The aforementioned preferred embodiments also apply to the composition of the invention.

According to a preferred embodiment, the composition of the invention comprises or in alternative consists of 30% paraffin, 30% isoparaffin, 20% ethanol and 20% at least one alcohol having 5 or 6 carbon atoms, preferably 2-methyl-butanol, n-hexanol or the mixtures thereof.

As stated, the composition of the invention is substantially comprised of the aforementioned components. However, small amounts of additional components may be present. By way of example, when present, 2,2-dimethoxypropane is added to the composition in an amount of 1-15% by volume to the total volume of the composition. It is also possible, and preferred, to add a catalytic amount of concentrated hydrochloric acid (37% HCl) at a rate of 1/1000 v/v to the volume of dimethoxypropane.

All the components of the composition are known and commercially available.

As mentioned, the composition of the invention has also been shown to be particularly useful for processing tissues with an adipose component, contrary to the compositions in the Italian Patent Applications mentioned above.

For the preparation of the composition, you may operate as follows: the solid paraffin is transferred into a jerrycan of suitable volume, to which heat is supplied by means of heating band or other heating system. The paraffin is left at the temperature of 60-65°C until a homogeneous liquid solution is obtained. The liquid components are then added to the jerrycan in no particular order. The jerrycan used is a closed system, it is equipped with a main hole with hermetic closure for the introduction of the paraffin and a septum with a non-return valve for the introduction of the liquid ingredients. The jerrycan is also equipped with a reflux condenser, which has the task of condensing the vapors of the low-boiling ingredients, making them fall as liquid drops inside the jerrycan itself (the reflux system is necessary to avoid overpressure inside the jerrycan and the loss of solvent in the form of vapor, thus affecting its composition). After adding the liquid components, the mixture is left under stirring at the temperature of 60-65°C for the time necessary to make the (liquid) solution homogeneous; it is then packed, still hot, into containers of various shapes or volumes, in which it cools.

The composition of the invention is a white solid at room temperature and pressure. This characteristic of the composition of the invention also makes it manageable, transportable and storable better than the various reagents required for the dehydration and clarification, which are all constituted by liquid solvents. A further important advantage is the respect of the operator's health, for whom the risks of spillage are drastically reduced and there is no need to move the reagents from the jerrycans containing the liquid reagents.

For its use, the composition is brought to the liquid state by simple heating, for example at temperatures above 45°C. The samples are then treated according to the invention, where "treating" means immersing the sample in the composition, preferably for about 0.5-3 hours.

The composition of the invention is particularly useful for processing tissues as defined above with an adipose component and is capable of processing the samples in both static and dynamic modes (solution agitation, perfusion, etc.).

It is possible to repeat the bath if necessary.

According to an embodiment, during processing, the sample can be rotated about its own axis, preferably according to the process described in Italian Patent Application No. 102021000027884, by the same Applicant. Such process allows for even better sample processing.

Furthermore, as stated, the composition described herein allows to simultaneously perform the dehydration, clarification and paraffin infiltration treatments, therefore incorporating in a single process the treatments (ii), (iii) and (iv) which conventionally involve several steps in solvents and in paraffin, as explained in the "Background of the invention".

In fact, surprisingly, the formulation of the invention, which includes alcohols having 5 or 6 carbon atoms, allows to process the samples, in particular the tissues with an adipose component, by simultaneously carrying out all the "traditional" steps of dehydration, clarification and paraffin infiltration, with a single step. More particularly, unlike the known formulations set forth above, it is not even necessary to perform the paraffin infiltration steps separately. According to the invention, the sample therefore carry out a single step in the formulation of the invention, for a time between 0.5 and 3 hours depending on the size of the sample, at ambient pressure and at the temperature of 45-65°C.

In practice, after an optional first washing of the sample previously fixed with formalin, with hydroalcoholic solution (50% or 70%), the composition of the invention dehydrates, clarifies and infiltrates the sample in a single step followed by an optional drying step before the inclusion in paraffin block.

At the end of said step, the sample is well dehydrated and infiltrated, ready to continue the standard routine of the histological diagnosis (inclusion in paraffin block, cutting of sections with microtome, staining of the sections, mounting, microscopic analysis).

Thus, the composition of the invention allows obtaining properly processed samples in very short time compared to standard processing, with significant savings in solvents and reagents.

Subject-matter of the invention, according to another aspect thereof, is the use of the composition of the invention as reagent for performing the dehydration, clarification and paraffin infiltration of the samples as defined herein, preferably tissue samples with an adipose component, in a single treatment.

Subject-matter of the invention, according to another aspect thereof, is a method for treating biological, cytological, histological and autopsical samples, preferably tissue samples with an adipose component, in particular for the dehydration, clarification and paraffin infiltration treatments, comprising the use of a composition as described herein.

Subject-matter of the invention, according to another aspect thereof, is a method for treating biological, cytological, histological and autopsical samples, preferably tissue samples with an adipose component, in particular for the dehydration, clarification and paraffin infiltration treatments, which comprises treating said samples with a composition as described herein.

According to another aspect thereof, subject-matter of the invention is a process for treating biological, cytological, histological and autopsical samples, preferably tissue samples with an adipose component, previously subjected to fixation with formalin, in particular for the treatments of dehydration, clarification and paraffin infiltration, comprising:
i. heating the composition of the invention to about 45-65°C;
ii. treating said samples with a composition according to the invention.

According to a preferred embodiment, in step (ii) said samples immersed in said composition are rotated about their axis.

The invention will now be described by means of the following examples, which are set forth herein for illustrative purposes only and in no way limiting.

### Experimental Section

### Example 1

### Composition according to the invention

Following the process set forth above, a composition consisting of (% by volume) is prepared:
30% paraffin
30% isoparaffin
20% ethanol
20% n-pentanol

### Example 2

### Composition according to the invention

Following the process set forth above, a composition consisting of (% by volume) is prepared:
30% paraffin
30% isoparaffin
20% ethanol
20% 2-methyl-1-butanol

### Example 3

### Composition according to the invention

Following the process set forth above, a composition consisting of (% by volume) is prepared:
30% paraffin
30% isoparaffin
20% ethanol
20% iso-pentanol

### Example 4

### Composition according to the invention

Following the process set forth above, a composition consisting of (% by volume) is prepared:
30% paraffin
30% isoparaffin
20% ethanol
20% n-hexanol

### Example 5

### Treatment of biological biopsy samples of tissue with predominance of adipose component and tissue without such component.

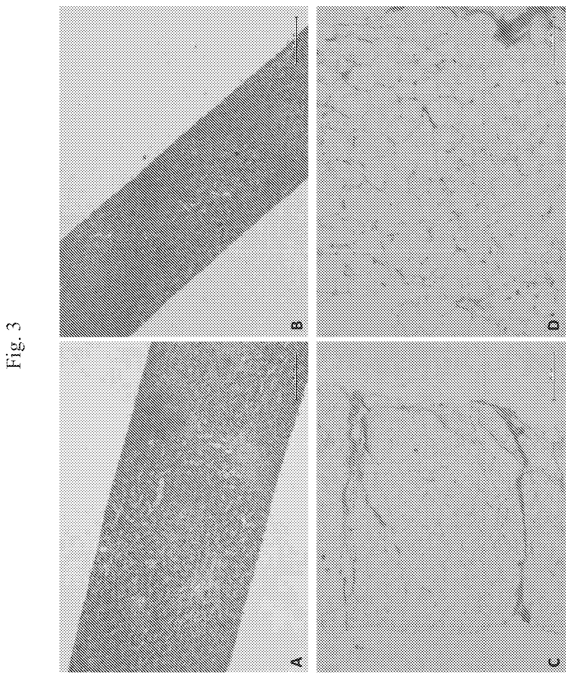

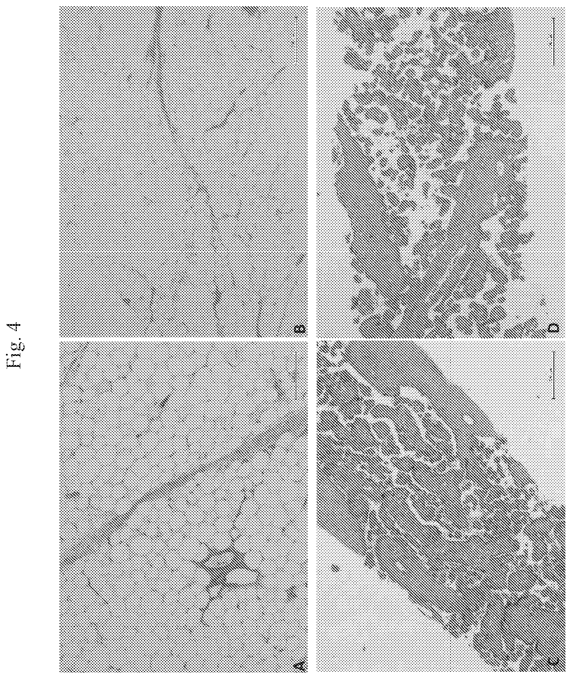

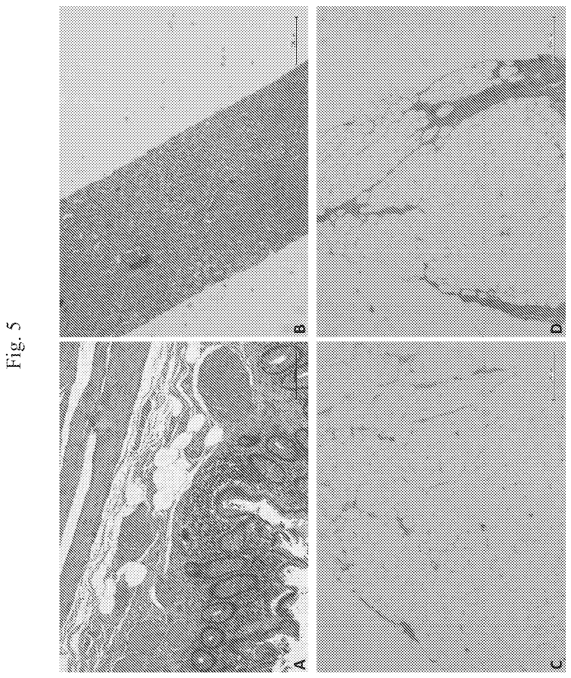

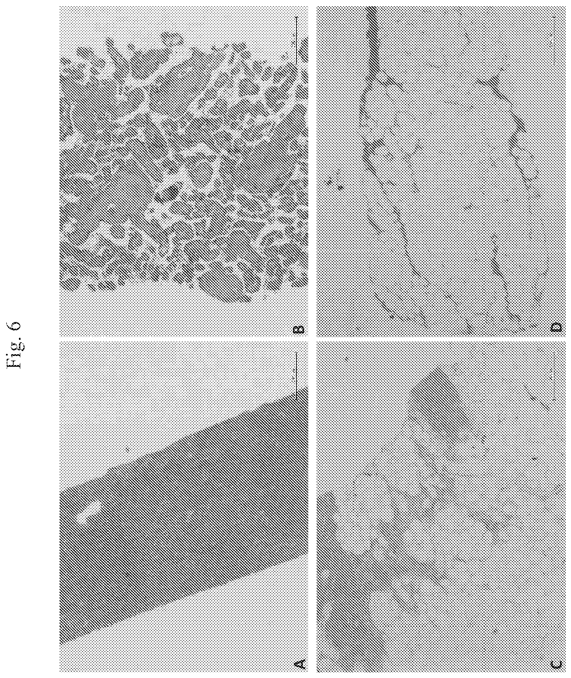

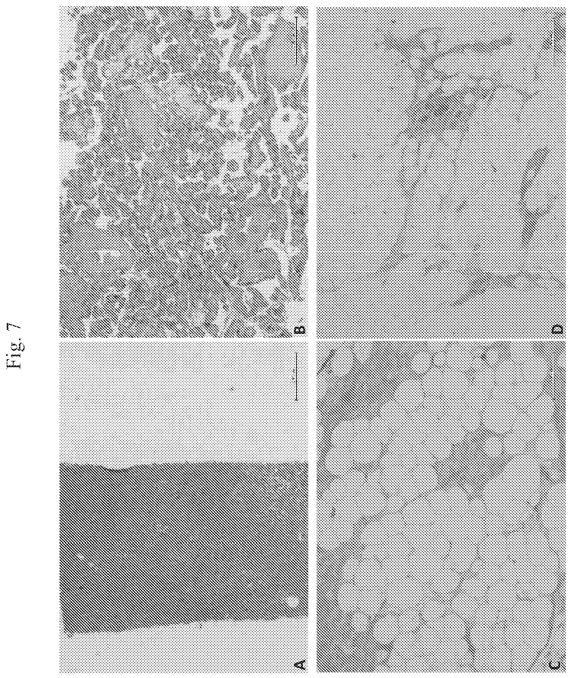

The biopsy samples to be tested (<2 mm thick) are placed in a bath in the composition of Examples 1 to 4 for a time of 25 minutes at room pressure at a temperature of 60°C. After this step is completed, the samples are embedded, cut, stained, mounted and viewed under a microscope. Figures 3 to 7 show the result of the treatment after processing with the composition of the invention, embedding, cutting and standard staining with hematoxylin/eosin (Figure 3 A - B: liver; C - D: breast n-pentanol; Figure 4 A - B: breast; C - D: placenta = 2-methyl-1-butanol; Figure 5 A: colon; B: liver; C - D: breast = iso-pentanol; Figures 6 and 7 A: liver; B: placenta; C - D: breast = n-hexanol). As evident from the figures, the tissue portions with predominance of adipose component, if processed with these formulations, show optimal preservation of morphology. Adipocytes are found to be well stretched and the other tissue components properly maintain their original structure.

### Example 6

### Treatment of biological samples of tissue with predominance of adipose component and tissue without such component, having thickness of about ±4 mm.

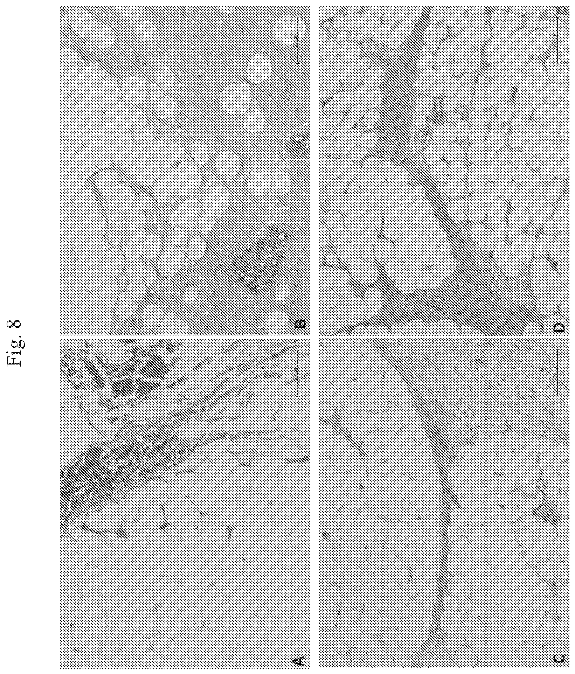

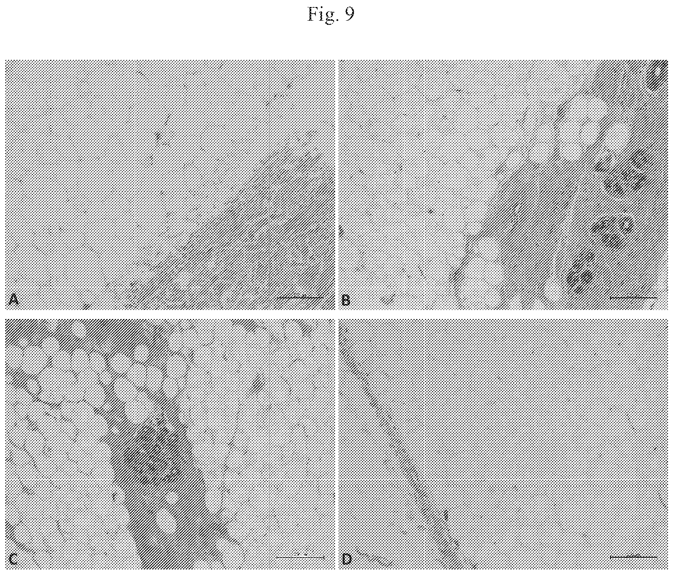

The samples to be tested measuring 1.5 x 1.5 cm (4 mm thick) are placed in a bath in the composition of Examples 1 and 4, for a time of 3 hours at room pressure at the temperature of 60°C. The composition is replaced with another aliquot of the same composition after 45' and after additional 45'. This is aimed at optimizing the yield of processing in terms of reagent volumes and process timing. After this step is completed, the samples are embedded, cut, stained, mounted and viewed under a microscope. Figures 8 and 9 show the result of the treatment after processing with the composition of the invention, embedding, cutting and standard staining with hematoxylin/eosin (Figure 8 A - B - C - D: breast = n-pentanol; Figure 9 A - B - C -D: breast = n-hexanol). As evident from the figures, the tissue portions with predominance of adipose component, if processed with these formulations, show optimal preservation of morphology. Adipocytes are found to be well stretched and the other tissue components properly maintain their original structure.

### Example 7

### Treatment of biological samples of tissue with predominance of adipose component with compositions not according to the invention

Tissue samples with an adipose component were treated as described in Example 6, but replacing the compositions with the following (not according to the invention):
Comparative Composition C4:
   30% paraffin
   30% isoparaffin
   20% ethanol
   20% tert-butanol
Comparative Composition C7:
   30% paraffin
   30% isoparaffin
   20% ethanol
   20% n-heptanol

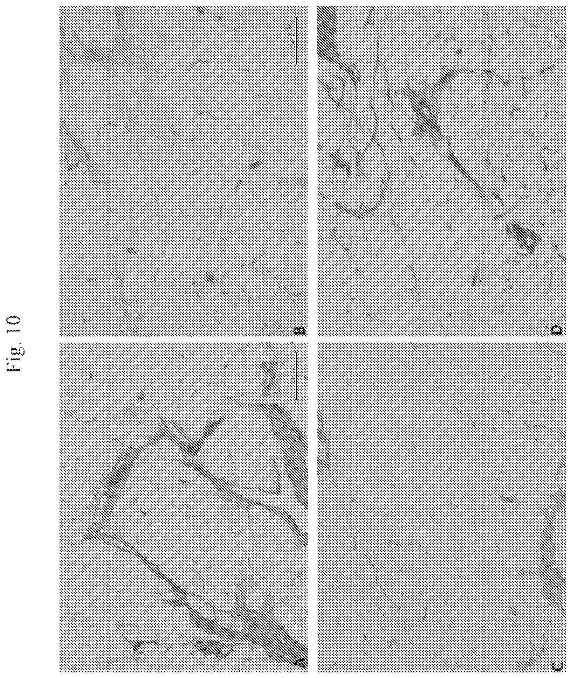

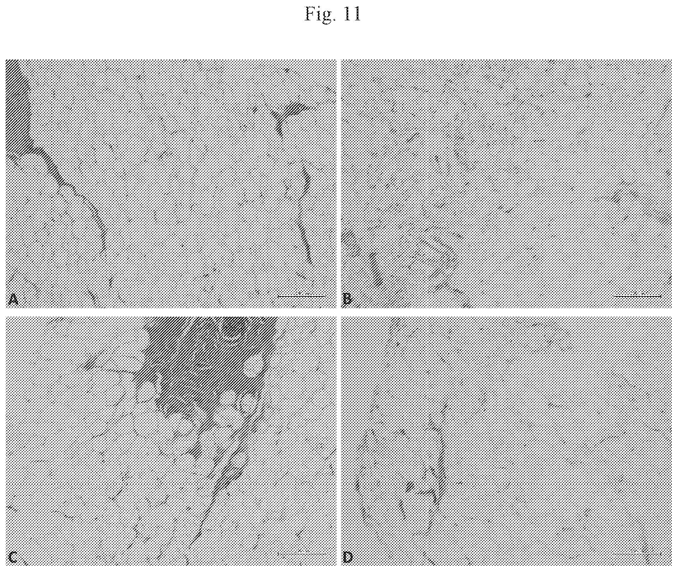

Figures 10 and 11 show the result of processing such tissues with C4 and C7 alcohol compositions, respectively. As can be seen from Figures 10 and 11, the result of processing is not qualitatively optimal; in particular, the adipose component of the samples does not appear to have a stretched and uniform appearance over the entire adipose region.

### Example 8

### Treatment of biological samples of tissue with a predominance of adipose component with a representative composition of Italian Patent Applications No. 102020000025159 and No. 102020000031031

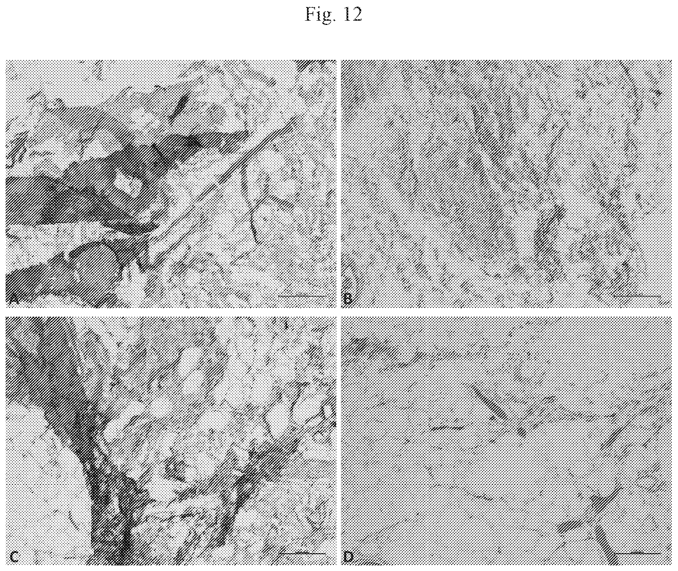

Tissue samples with an adipose component were treated as described in Example 5. Figure 12 shows the result of processing such tissues with a representative composition of Italian Patent Applications No. 102020000025159 and No. 102020000031031, constituted by:
50% paraffin
30% isoparaffin
20% ethanol

(Figure 12 A - B: colon; C - D: breast). As evident from the Figures, the tissue portions with predominance of adipose component, if processed with these formulations, do not show optimal preservation of morphology. Adipocytes are not well stretched and the other tissue components fail to properly maintain their original structure. It is therefore more difficult for technicians to manage the sample in the post-processing steps and for pathologists to read the preparation.

## Claims

1. Use of a composition comprising paraffin, isoparaffin, ethanol and at least one alcohol having 5 or 6 carbon atoms, for the preparation of biological, cytological, histological and autopsical samples for the analysis thereof, wherein said isoparaffin is a mixture of aliphatic hydrocarbons, **characterized in that** said paraffin is solid paraffin.

2. Use according to claim 1, **characterized in that** said isoparaffin does not consist in isododecane alone.

3. Use according to claim 1 or 2, for the simultaneous performing of treatments of dehydration, clarification and infiltration in paraffin, in a single step.

4. Use according to any one of claims 1 to 3, **characterized in that** said composition also comprises 2,2-dimethoxypropane.

5. A composition consisting of paraffin, isoparaffin, ethanol and at least one alcohol having 5 or 6 carbon atoms, for the preparation of biological, cytological, histological and autopsical samples for the analysis thereof, and possibly 2,2-dimethoxypropane, wherein said isoparaffin is a mixture of aliphatic hydrocarbons, **characterized in that** said paraffin is solid paraffin.

6. The composition according to claim 5, **characterized in that** it consists of:
- paraffin: 20-40%, preferably about 30%;
- isoparaffin: 20-40%, preferably about 30%;
- ethanol: 15-25%, preferably about 20%; and
- at least one alcohol having 5 or 6 carbon atoms: 15-25%, preferably about 20%, preferably selected from 2-methyl-butanol, n-hexanol or the mixtures thereof; and
- possibly one or more further components, at the rate of 0-15%, preferably 0-5%;
said % being expressed by volume to the total volume of the composition.

7. The composition according to claim 5 or 6, **characterized in that** it comprises 30% paraffin, 30% isoparaffin, 20% ethanol and 20% at least one alcohol having 5 or 6 carbon atoms, preferably 2-methyl-butanol, n-hexanol or the mixtures thereof.

8. A method for dehydrating, clarifying and infiltrating biological, cytological, histological and autopsical samples in paraffin, comprising treating said samples with a composition according to any one of claims 5 to 7.

9. The method for treating biological, cytological, histological and autopsical samples, comprising performing a single treatment of dehydration, clarification and infiltration in paraffin with the composition according any one of claims 5 to 7, on a sample previously subjected to fixation.

10. A process for treating biological, cytological, histological and autopsical samples previously subjected to fixation, in particular for treatments of dehydration, clarification and infiltration in paraffin, comprising:
i. heating at about 45-65°C the composition according to any one of claims 5 to 7;
ii. treating said samples with said composition.

11. The process according to claim 9, **characterized in that** in step (II) said samples immersed in said composition are rotated about their axis.

12. Use of the composition of any one of claims 5 to 7, as a reagent for performing the simultaneous dehydration, clarification and infiltration in paraffin of biological, cytological, histological and autopsical samples.

## Patentansprüche

1. Verwendung einer Zusammensetzung, umfassend Paraffin, Isoparaffin, Ethanol und mindestens einen Alkohol mit 5 oder 6 Kohlenstoffatomen, zur Präparation von biologischen, zytologischen, histologischen und autoptischen Proben für deren Analyse, wobei das Isoparaffin ein Gemisch aliphatischer Kohlenwasserstoffe ist, **dadurch gekennzeichnet, dass** das Paraffin festes Paraffin ist.

2. Verwendung nach Anspruch 1, **dadurch gekennzeichnet, dass** das Isoparaffin nicht allein aus Isododecan besteht.

3. Verwendung nach Anspruch 1 oder 2 zur gleichzeitigen Durchführung der Behandlungen Entwässerung, Klärung und Infiltration in Paraffin in einem einzigen Schritt.

4. Verwendung nach einem der Ansprüche 1 bis 3, **dadurch gekennzeichnet, dass** die Zusammensetzung ferner 2,2-Dimethoxypropan umfasst.

5. Zusammensetzung, bestehend aus Paraffin, Isoparaffin, Ethanol und mindestens einem Alkohol mit 5 oder 6 Kohlenstoffatomen, zur Präparation von biologischen, zytologischen, histologischen und autoptischen Proben für deren Analyse, sowie gegebenenfalls 2,2-Dimethoxypropan, wobei das Isoparaffin ein Gemisch aliphatischer Kohlenwasserstoffe ist, **dadurch gekennzeichnet, dass** das Paraffin festes Paraffin ist.

6. Zusammensetzung nach Anspruch 5, **dadurch gekennzeichnet, dass** sie besteht aus:
- Paraffin: 20-40 %, vorzugsweise etwa 30 %;
- Isoparaffin: 20-40 %, vorzugsweise etwa 30 %;
- Ethanol: 15-25 %, vorzugsweise etwa 20 %; und
- mindestens einem Alkohol mit 5 oder 6 Kohlenstoffatomen: 15-25 %, vorzugsweise etwa 20 %, vorzugsweise ausgewählt aus 2-Methylbutanol, n-Hexanol oder Mischungen davon; und
- gegebenenfalls einer oder mehreren weiteren Komponenten in einem Anteil von 0-15 %, vorzugsweise 0-5 %;
wobei die genannten % bezogen auf das Gesamtvolumen der Zusammensetzung als Volumen ausgedrückt sind.

7. Zusammensetzung nach Anspruch 5 oder 6, **dadurch gekennzeichnet, dass** sie 30 % Paraffin, 30 % Isoparaffin, 20 % Ethanol und 20 % mindestens eines Alkohols mit 5 oder 6 Kohlenstoffatomen, vorzugsweise 2-Methylbutanol, n-Hexanol oder Mischungen davon, umfasst.

8. Verfahren zum Entwässern, Klären und Infiltrieren von biologischen, zytologischen, histologischen und autoptischen Proben in Paraffin, umfassend das Behandeln der Proben mit einer Zusammensetzung nach einem der Ansprüche 5 bis 7.

9. Verfahren zur Behandlung von biologischen, zytologischen, histologischen und autoptischen Proben, umfassend die Durchführung einer einzigen Behandlung zur Entwässerung, Klärung und Infiltration in Paraffin mit der Zusammensetzung nach einem der Ansprüche 5 bis 7 an einer zuvor einer Fixierung unterzogenen Probe.

10. Verfahren zur Behandlung von biologischen, zytologischen, histologischen und autoptischen Proben, die zuvor einer Fixierung unterzogen wurden, insbesondere für Behandlungen zur Entwässerung, Klärung und Infiltration in Paraffin, umfassend:
i. Erwärmen der Zusammensetzung nach einem der Ansprüche 5 bis 7 auf etwa 45-65 °C;
ii. Behandeln der Proben mit der Zusammensetzung.

11. Verfahren nach Anspruch 9, **dadurch gekennzeichnet, dass** in Schritt (II) die in der Zusammensetzung eingetauchten Proben um ihre Achse gedreht werden.

12. Verwendung der Zusammensetzung nach einem der Ansprüche 5 bis 7 als Reagenz zur Durchführung der gleichzeitigen Entwässerung, Klärung und Infiltration in Paraffin von biologischen, zytologischen, histologischen und autoptischen Proben.

## Revendications

1. Utilisation d'une composition comprenant de la paraffine, de l'isoparaffine, de l'éthanol et au moins un alcool comportant 5 ou 6 atomes de carbone, pour la préparation d'échantillons biologiques, cytologiques, histologiques et d'autopsie en vue de leur analyse, dans laquelle ladite isoparaffine est un mélange d'hydrocarbures aliphatiques, **caractérisée en ce que** ladite paraffine est de la paraffine solide.

2. Utilisation selon la revendication 1, **caractérisée en ce que** ladite isoparaffine n'est pas constituée uniquement d'isododécane.

3. Utilisation selon la revendication 1 ou 2, pour la réalisation simultanée, en une seule étape, de traitements de déshydratation, de clarification et d'infiltration dans de la paraffine.

4. Utilisation selon l'une quelconque des revendications 1 à 3, **caractérisée en ce que** ladite composition comprend également du 2,2-diméthoxypropane.

5. Composition constituée de paraffine, d'isoparaffine, d'éthanol et d'au moins un alcool comportant 5 ou 6 atomes de carbone, pour la préparation d'échantillons biologiques, cytologiques, histologiques et d'autopsie en vue de leur analyse, et éventuellement de 2,2-diméthoxypropane, dans laquelle ladite isoparaffine est un mélange d'hydrocarbures aliphatiques, **caractérisée en ce que** ladite paraffine est de la paraffine solide.

6. Composition selon la revendication 5, **caractérisée en ce qu'**elle est constituée de :
- paraffine : 20 à 40 %, de préférence environ 30 % ;
- isoparaffine : 20 à 40 %, de préférence environ 30 % ;
- éthanol : 15 à 25 %, de préférence environ 20 % ; et
- au moins un alcool comportant 5 ou 6 atomes de carbone : 15 à 25 %, de préférence environ 20 %, choisi de préférence parmi le 2-méthylbutanol, le n-hexanol ou leurs mélanges ; et
- éventuellement un ou plusieurs autres composants, à raison de 0 à 15 %, de préférence de 0 à 5 % ;
lesdits % étant exprimés en volume par rapport au volume total de la composition.

7. Composition selon la revendication 5 ou 6, **caractérisée en ce qu'**elle comprend 30 % de paraffine, 30 % d'isoparaffine, 20 % d'éthanol et 20 % d'au moins un alcool comportant 5 ou 6 atomes de carbone, de préférence le 2-méthylbutanol, le n-hexanol ou leurs mélanges.

8. Procédé de déshydratation, de clarification et d'infiltration d'échantillons biologiques, cytologiques, histologiques et d'autopsie dans de la paraffine, comprenant le traitement desdits échantillons avec une composition selon l'une quelconque des revendications 5 à 7.

9. Procédé de traitement d'échantillons biologiques, cytologiques, histologiques et d'autopsie, comprenant la réalisation d'un traitement unique de déshydratation, de clarification et d'infiltration dans de la paraffine avec la composition selon l'une quelconque des revendications 5 à 7, sur un échantillon préalablement soumis à une fixation.

10. Procédé de traitement d'échantillons biologiques, cytologiques, histologiques et d'autopsie préalablement soumis à une fixation, en particulier pour des traitements de déshydratation, de clarification et d'infiltration dans de la paraffine, comprenant :
i.un chauffage à environ 45-65 °C de la composition selon l'une quelconque des revendications 5 à 7 ;
ii. un traitement desdits échantillons avec ladite composition.

11. Procédé selon la revendication 9, **caractérisé en ce que**, à l'étape (II), lesdits échantillons immergés dans ladite composition sont mis en rotation autour de leur axe.

12. Utilisation de la composition selon l'une quelconque des revendications 5 à 7, en tant que réactif pour effectuer simultanément la déshydratation, la clarification et l'infiltration dans de la paraffine d'échantillons biologiques, cytologiques, histologiques et d'autopsie.
